# EUROPÄISCHE PATENTSCHRIFT

(11) **EP 0 659 850 B1**
(45) Veröffentlichungstag und Bekanntmachung des Hinweises auf die Patenterteilung: **06.05.1998**
(21) Anmeldenummer: 94118180.2
(22) Anmeldetag: 18.11.1994
(51) Int. Cl.: C09D 5/18

(54) **Aufblähbare, flammhemmende Überzugsmassen**
Foamable flame-retardant coating compositions
Compositions de revêtement retardatrices de flamme et expansibles

(30) Priorität: 21.12.1993 DE 4343668
(43) Veröffentlichungstag der Anmeldung: 28.06.1995
(73) Patentinhaber: Clariant GmbH, 65929 Frankfurt am Main (DE)
(72) Erfinder: Scholz, Guido, Dr., D-50859 Köln (DE); Pirig, Wolf-Dieter, D-538798 Euskirchen (DE)

(56) Entgegenhaltungen:
- EP-A- 0 468 259
- US-A- 3 953 374
- US-A- 4 247 435
- DATABASE WPI Derwent Publications Ltd., London, GB; AN 70-73111R[40] XP002007538 & JP-B-45 031 689 (DAI-ICHI KOGYO SEIYAKU CO.)

## Beschreibung

Die vorliegende Erfindung betrifft aufblähbare, flammhemmende Überzugsmassen, welche mindestens aus

| | |
|---|---|
| 4 bis 25 Gewichts% | eines filmbildenden Bindemittels, |
| 10 bis 40 Gewichts% | Ammoniumpolyphosphat, |
| 8 bis 40 Gewichts% | mindestens einer bei Hitzeeinwirkung carbonisierenden Substanz, |
| 6 bis 25 Gewichts% | eines Treibmittels, |
| 0 bis 5 Gewichts% | Dispergiermittel, |
| 0 bis 25 Gewichts% | Füllstoffe |

bestehen.

Aus der US-PS 4 166 743 sind aufblähbare Überzugsmassen bekannt, welche aus einem Filmbildner, einem Ammoniumpolyphosphat, mindestens einer bei Hitzeeinwirkung carbonisierenden Substanz, einem Dispergiermittel, einem Kristallwasser aufweisenden Salz, einem Treibmittel und gegebenenfalls Füllstoffen bestehen. Dabei können als Filmbildner wäßrige Dispersionen aus Polyvinylacetat oder aus einem Copolymerisat aus Vinylacetat und Dibutylmaleinat verwendet werden, während als carbonisierende Substanz Dicyandiamid, Pentaerythrit oder Melamin geeignet sind. Als Dispergiermittel kommen neben Wasser Ethylacetat, Butylacetat, Xylol oder Toluol in Frage, während als Treibmittel Chlorparaffine Verwendung finden.

Nach einer neuen Literaturstelle (vergl. J. TRDITSCH: "International Plastics Flammability Handbook", 2. Auflage, Oxford University Press, New York, 1990, Seiten 52 und 53) sind typische Vertreter für carbonisierende Substanzen Pentaerythrit und Stärke, während Guanidine, beispielsweise Cyanoguanidin (Dicyandiamid), Melamin und Chlorparaffine den Treibmitteln zuzuordnen sind.

Nachteilig ist bei den bekannten aufblähbaren Überzugsmassen, daß sie im Treibmittel und/oder in der bei Hitzeeinwirkung carbonisierenden Substanz organisch gebundenes Halogen enthalten, wodurch bei der Zersetzung der Überzugsmassen korrosive und toxische Gase freigesetzt werden.

Es ist daher Aufgabe der vorliegenden Erfindung, aufblähbare Überzugsmassen anzugeben, welche flammhemmende Eigenschaften besitzen, bei deren Zersetzung jedoch keine halogenhaltigen Verbindungen freigesetzt werden. Das wird erfindungsgemäß dadurch erreicht, daß in den Überzugsmassen als bei Hitzeeinwirkung carbonisierende Substanz bzw. als Treibmittel und als zusätzlicher Säurespender Ammoniumsalze von Phosphorsäurealkylestern enthalten sind.

Die Überzugsmassen gemäß der Erfindung können weiterhin wahlweise auch noch dadurch ausgestaltet sein, daß
a) Phosphorsäuremonoalkylester enthalten sind;
b) Phosphorsäuredialkylester enthalten sind;
c) die Salze hydroxyalkylsubstituierte Ammoniumsalze sind;
d) als hydroxyalkylsubstituiertes Ammonium Monoethanolamin verwendet ist;
e) als hydroxyalkylsubstituiertes Ammonium Diethanolamin verwendet ist;
f) als hydroxyalkylsubstituiertes Ammonium Triethanolamin verwendet ist;
g) die Salze alkylsubstituierte Ammoniumsalze sind;
h) der Alkylrest 1 bis 6 C-Atome aufweist;
i) die Salze arylsubstituierte Ammoniumsalze sind.

Die in den erfindungsgemäßen Überzugsmassen enthaltenen Ammoniumsalze von Phosphorsäurealkylestern können beispielsweise nach dem aus der US-PS 4 118 443 bekannten Verfahren hergestellt werden.

In den Überzugsmassen gemäß der Erfindung können auch Gemische von Phosphorsäuremonoalkylestern und Phosphorsäuredialkylestern enthalten sein.

Die in den erfindungsgemäßen Überzugsmassen enthaltenen Ammoniumsalze von Phosphorsäurealkylester wirken nicht nur flammhemmend, sondern verleihen den Massen auch weichmachende Eigenschaften. Sie wirken sich damit positiv auf die Filmrißbeständigkeit der dämmschichtbildenden Überzugsmassen aus und können somit Chlorparaffine und andere halogenhaltige Additive, beispielsweise Tris(2-chlorethyl)phosphat (TCEP) oder Tris(2-chlorisopropyl)phosphat (TCPP) vollständig substituieren.

In den folgenden Beispielen werden flammhemmende Überzugsmassen hergestellt und ihre Wirksamkeit ermittelt, wobei als Ammoniumpolyphosphat Hostaflam AP 462 (Fa. Hoechst AG, Frankfurt) eingetragen wurde. Die Prüfung der Isolierfähigkeit der unter Verwendung dieser Überzugsmassen hergestellten Intumeszenzanstriche erfolgte nach DIN 4102, Teil 2 (1977) in einem Kleinprüfstand gemäß DIN 4102, Teil 8 (1986), während die Prüfung der Oberflächengüte visuell vorgenommen wurde.

### Beispiel 1 (Vergleichsbeispiel)

In ein mit Dissolverscheibe ausgestattetes Rührgefäß wurden nacheinander eingetragen:

| | |
|---|---|
| 20,8 Gew.% | Wasser |
| 3 Gew.% | ®Tylose |
| 0,2 Gew.% | ®Lopon 890 |
| 4 Gew.% | Titandioxid |
| 12 Gew.% | Pentaerythrit |
| 24 Gew.% | Ammoniumpolyphosphat |
| 14 Gew.% | Melamin |
| 20 Gew.% | ®Mowilith DM 230 |
| 2 Gew.% | Chlorparaffin 50 flüssig |

Die resultierende Überzugsmasse wurde mit einer Rolle einseitig auf ein Stahlblech (St 37) von 280 x 280 x 6 mm³ aufgetragen. Nach eintägiger Trocknung bei Zimmertemperatur wurde erneut Überzugsmasse aufgetragen. Das Gewicht der aufgetragenen Masse betrug nun 2 kg/m². Schließlich wurde das beschichtete Blech 2 Wochen bei 20 °C an der Luft getrocknet.

Die Oberfläche der Beschichtung war glatt und rißfrei.

Die Brandprüfung des beschichteten Bleches gemäß DIN 4102 ergab die Feuerwiderstandsklasse F 60.

### Beispiel 2 (Vergleichsbeispiel)

Es wurde die gleiche Überzugsmasse wie in Beispiel 1 hergestellt, jedoch ohne die Komponente Chlorparaffin.

Die Oberfläche des mit dieser Überzugsmasse versehenen Bleches war rauh und von feinen Rissen durchzogen.

Die Brandprüfung des beschichteten Bleches gemäß DIN 4102 ergab die Feuerwiderstandsklasse F 30.

### Beispiel 3 (Vergleichsbeispiel)

Es wurde die gleiche Überzugsmasse wie in Beispiel 1 hergestellt, jedoch ohne die Komponente Chlorparaffin. Darüber hinaus wurde das filmbildende Bindemittel Mowilith DM 230 (Vinylacetat-Vinylester-Copolymerisat der Fa. Hoechst AG, Frankfurt) durch ®Impranil DLP (anionische aliphatische Polyester-Polyurethan-Dispersion der Fa. Bayer AG, Leverkusen) ersetzt.

Die Oberfläche des mit dieser Überzugsmasse versehenen Bleches war rauh und von feinen Rissen durchzogen.

Die Brandprüfung des beschichteten Bleches gemäß DIN 4102 erfüllte die Anforderungen der Feuerwiderstandsklasse F 30 nicht.

### Beispiel 4 (Vergleichsbeispiel)

Es wurde die gleiche Überzugsmasse wie in Beispiel 1 hergestellt, jedoch wurde das filmbildende Bindemittel Mowilith DM 230 durch ®Impranil DLP ersetzt.

Die Oberfläche des mit dieser Überzugsmasse versehenen Bleches war glatt und rißfrei.

Die Brandprüfung des beschichteten Bleches gemäß DIN 4102 ergab die Feuerwiderstandsklasse F 30.

### Beispiel 5 (Vergleichsbeispiel)

Es wurde die gleiche Überzugsmasse wie in Beispiel 1 hergestellt, jedoch wurde das filmbildende Bindemittel Mowilith DM 230 durch ®Mowilith DM 60 (Styrol-Acrylsäureester-Copolymerisat der Fa. Hoechst AG, Frankfurt) ersetzt.

Die Oberfläche des mit dieser Überzugsmasse versehenen Bleches war glatt und rißfrei.

Die Brandprüfung des beschichteten Bleches gemäß DIN 4102 ergab die Feuerwiderstandsklasse F 30.

### Beispiel 6 (Vergleichsbeispiel)

Es wurde eine analoge Überzugsmasse wie in Beispiel 1 hergestellt, wobei das filmbildende Bindemittel Mowilith DM 230 durch ®Mowilith DC (Homopolymerisat auf Vinylacetat-Basis der Fa. Hoechst AG, Frankfurt) und das Chlorparaffin durch Tris(2-chlorethyl)phosphat ersetzt wurden.

Die Oberfläche des mit dieser Überzugsmasse versehenen Bleches war glatt und rißfrei.

Die Brandprüfung des beschichteten Bleches gemäß DIN 4102 ergab die Feuerwiderstandsklasse F 30.

### Beispiel 7 (gemäß der Erfindung)

Es wurde die gleiche Überzugsmasse wie in Beispiel 1 hergestellt, jedoch waren anstelle von 2 Gew.% Chlorparaffin 1,5 Gew.% eines auf pH 7 eingestellten Monoethanolammoniumsalzes der ®Knapsack Reinigerkomponente MPS verwendet.

Die Oberfläche des mit dieser Überzugsmasse beschichteten Bleches war rißfrei und glatter als bei Beispiel 1.

Die Brandprüfung des beschichteten Bleches gemäß DIN 4102 ergab die Feuerwiderstandsklasse F 60.

### Beispiel 8 (gemäß der Erfindung)

Es wurde die gleiche Überzugsmasse wie in Beispiel 1 hergestellt, jedoch waren anstelle von 2 Gew.% Chlorparaffin 1,5 Gew.% eines auf pH 7 eingestellten Monoethanolammoniumsalzes des ®Knapsack Phosphorsäureesters MDE verwendet.

Die Oberfläche des mit dieser Überzugsmasse beschichteten Bleches war rißfrei und glatter als bei Beispiel 1.

Die Brandprüfung des beschichteten Bleches gemäß DIN 4102 ergab die Feuerwiderstandsklasse F 60.

### Beispiel 9 (gemäß der Erfindung)

Es wurde die gleiche Überzugsmasse wie in Beispiel 4 hergestellt, jedoch waren anstelle von 2 Gew.% Chlorparaffin 1,5 Gew.% eines auf pH 7 eingestellten Monoethanolammoniumsalzes des ®Knapsack Phosphorsäureesters MDE verwendet.

Die Oberfläche des mit dieser Überzugsmasse versehenen Bleches war glatt und rißfrei.

Die Brandprüfung des beschichteten Bleches gemäß DIN 4102 ergab die Feuerwiderstandsklasse F 30.

### Beispiel 10 (gemäß der Erfindung)

Es wurde die gleiche Überzugsmasse wie in Beispiel 5 hergestellt, jedoch waren anstelle von 2 Gew.% Chlorparaffin 1,5 Gew.% eines auf pH 7 eingestellten Monoethanolammoniumsalzes des ®Knapsack Phosphorsäureesters MDE verwendet.

Die Oberfläche des mit dieser Überzugsmasse versehenen Bleches war glatt und rißfrei.

Die Brandprüfung des beschichteten Bleches gemäß DIN 4102 ergab die Feuerwiderstandsklasse F 30.

### Beispiel 11 (gemäß der Erfindung)

Es wurde die gleiche Überzugsmasse wie in Beispiel 6 hergestellt, jedoch waren anstelle von 2 Gew.% Tris(2-chlorethyl)phosphat 1,5 Gew.% eines auf pH 7 eingestellten Monoethanolammoniumsalzes des ®Knapsack Phosphorsäureesters MDE verwendet.

Die Oberfläche des mit dieser Überzugsmasse versehenen Bleches war glatt und rißfrei.

Die Brandprüfung des beschichteten Bleches gemäß DIN 4102 ergab die Feuerwiderstandsklasse F 30.

### Beispiel 12 (gemäß der Erfindung)

Es wurde die gleiche Überzugsmasse wie in Beispiel 5 hergestellt, jedoch waren anstelle von 2 Gew.% Chlorparaffin 1,5 Gew.% eines auf pH 7 eingestellten Triethylammoniumsalzes des ®Knapsack Phosphorsäureesters MDE verwendet.

Die Oberfläche des mit dieser Überzugsmasse versehenen Bleches war glatt und rißfrei.

Die Brandprüfung des beschichteten Bleches gemäß DIN 4102 ergab die Feuerwiderstandsklasse F 30.

### Beispiel 13 (gemäß der Erfindung)

Es wurde die gleiche Überzugsmasse wie in Beispiel 5 hergestellt, jedoch waren anstelle von 2 Gew.% Chlorparaffin 1,5 Gew.% eines auf pH 7 eingestellten Triphenylammoniumsalzes des ®Knapsack Phosphorsäureesters MDE verwendet.

Die Oberfläche des mit dieser Überzugsmasse versehenen Bleches war glatt und rißfrei.

Die Brandprüfung des beschichteten Bleches gemäß DIN 4102 ergab die Feuerwiderstandsklasse F 30.

### Beispiel 14 (gemäß der Erfindung)

Es wurde die gleiche Überzugsmasse wie in Beispiel 5 hergestellt, jedoch waren anstelle von 2 Gew.% Chlorparaffin 1,5 Gew.% eines auf pH 7 eingestellten Tribenzylammoniumsalzes des ®Knapsack Phosphorsäureesters MDE verwendet.

Die Oberfläche des mit dieser Überzugsmasse versehenen Bleches war glatt und rißfrei.

Die Brandprüfung des beschichteten Bleches gemäß DIN 4102 ergab die Feuerwiderstandsklasse F 30.

### Beispiel 15 (gemäß der Erfindung)

Es wurde die gleiche Überzugsmasse wie in Beispiel 1 hergestellt, jedoch waren anstelle von 2 Gew.% Chlorparaffin 1,5 Gew.% eines auf pH 7 eingestellten Diethanolammoniumsalzes der ®Knapsack Reinigerkomponente MPS verwendet.

Die Oberfläche des mit dieser Überzugsmasse versehenen Bleches war rißfrei und glatter als bei Beispiel 1.

Die Brandprüfung des beschichteten Bleches gemäß DIN 4102 ergab die Feuerwiderstandsklasse F 60.

### Beispiel 16 (gemäß der Erfindung)

Es wurde die gleiche Überzugsmasse wie in Beispiel 1 hergestellt, jedoch waren anstelle von 2 Gew.% Chlorparaffin 1,5 Gew.% eines auf pH 7 eingestellten Triethanolammoniumsalzes der ®Knapsack Reinigerkomponente MPS verwendet.

Die Oberfläche des mit dieser Überzugsmasse versehenen Bleches war rißfrei und glatter als bei Beispiel 1.

Die Brandprüfung des beschichteten Bleches gemäß DIN 4102 ergab die Feuerwiderstandsklasse F 60.

## Patentansprüche

1. Aufblähbare, flammhemmende Überzugsmassen, mindestens bestehend aus
| | |
|---|---|
| 4 bis 25 Gewichts% | eines filmbildenden Bindemittels, |
| 10 bis 40 Gewichts% | Ammoniumpolyphosphat, |
| 8 bis 40 Gewichts% | mindestens einer bei Hitzeeinwirkung carbonisierenden Substanz, |
| 6 bis 25 Gewichts% | eines Treibmittels, |
| 0 bis 5 Gewichts% | Dispergiermittel |
| 0 bis 25 Gewichts% | Füllstoffe, |
dadurch gekennzeichnet, daß als bei Hitzeeinwirkung carbonisierende Substanz bzw. als Treibmittel und als zusätzlicher Säurespender Ammoniumsalze von Phosphorsäurealkylestern enthalten sind.

2. Überzugsmasse nach Anspruch 1, dadurch gekennzeichnet, daß Phosphorsäuremonoalkylester enthalten sind.

3. Überzugsmasse nach Anspruch 1, dadurch gekennzeichnet, daß Phosphorsäuredialkylester enthalten sind.

4. Überzugsmasse nach mindestens einem der Ansprüche 1 bis 3, dadurch gekennzeichnet, daß die Salze hydroxyalkylsubstituierte Ammoniumsalze sind.

5. Überzugsmasse nach Anspruch 4, dadurch gekennzeichnet, daß als hydroxyalkylsubstituiertes Ammonium Monoethanolamin verwendet ist.

6. Überzugsmasse nach Anspruch 4, dadurch gekennzeichnet, daß als hydroxyalkylsubstituiertes Ammonium Diethanolamin verwendet ist.

7. Überzugsmasse nach Anspruch 4, dadurch gekennzeichnet, daß als hydroxyalkylsubstituiertes Ammonium Triethanolamin verwendet ist.

8. Überzugsmasse nach mindestens einem der Ansprüche 1 bis 3, dadurch gekennzeichnet, daß die Salze alkylsubstituierte Ammoniumsalze sind.

9. Überzugsmasse nach Anspruch 8, dadurch gekennzeichnet, daß der Alkylrest 1 bis 6 C-Atome aufweist.

10. Überzugsmasse nach mindestens einem der Ansprüche 1 bis 3, dadurch gekennzeichnet, daß die Salze arylsubstituierte Ammoniumsalze sind.

## Claims

1. An expandable, flame-retardant coating composition comprising at least
from 4 to 25% by weight of a film-forming binder,
from 10 to 40% by weight of a ammonium polyphosphate,
from 8 to 40% by weight of at least one substance which is carbonized under the effect of heat,
from 6 to 25% by weight of an expansion agent,
from 0 to 5% by weight of dispersants and
from 0 to 25% by weight of fillers,
wherein ammonium salts of alkyl phosphates are present as substance which is carbonized under the effect of heat or as expansion agent and as additional acid donor.

2. A coating composition as claimed in claim 1, wherein monoalkyl phosphates are present.

3. A coating composition as claimed in claim 1, wherein dialkyl phosphates are present.

4. A coating composition as claimed in at least one of claims 1 to 3, wherein the salts are hydroxyalkyl-substituted ammonium salts.

5. A coating composition as claimed in claim 4, wherein monoethanolamine is used as hydroxyalkyl-substituted ammonium.

6. A coating composition as claimed in claim 4, wherein diethanolamine is used as hydroxyalkyl-substituted ammonium.

7. A coating composition as claimed in claim 4, wherein triethanolamine is used as hydroxyalkyl-substituted ammonium.

8. A coating composition as claimed in at least one of claims 1 to 3, wherein the salts are alkylsubstituted ammonium salts.

9. A coating composition as claimed in claim 8, wherein the alkyl radical has 1 to 6 carbon atoms.

10. A coating composition as claimed in at least one of claims 1 to 3, wherein the salts are aryl-substituted ammonium salts.

## Revendications

1. Compositions de revêtement retardatrices d'inflammation susceptibles de gonfler, constituées d'au moins
| | |
|---|---|
| 4 à 25 % en masse | d'un liant filmogène |
| 10 à 40 % en masse | de polyphosphate d'ammonium, |
| 8 à 40 % en masse | d'au moins une substance se carbonisant sous l'effet de la chaleur, |
| 6 à 25 % en masse | d'un agent gonflant, |
| 0 à 5 % en masse | d'un agent dispersant, |
| 0 à 25 % en masse | de charges, |
caractérisées en ce qu'elles contiennent comme substance se carbonisant sous l'effet de la chaleur ou comme agent gonflant et comme donneur d'acide additionnel des sels d'ammonium d'esters alkyliques d'acide phosphorique.

2. Composition de revêtement selon la revendication 1, caractérisée en ce qu'elle contient des monoesters alkyliques d'acide phosphorique.

3. Composition de revêtement selon la revendication 1, caractérisée en ce qu'elle contient des diesters alkyliques d'acide phosphorique.

4. Composition de revêtement selon l'une au moins des revendications 1 à 3, caractérisée en ce que les sels sont des sels d'ammonium substitué par hydroxyalkyle.

5. Composition de revêtement selon la revendication 4, caractérisée en ce que l'on utilise la monoéthanolamine comme ammonium substitué par hydroxyalkyle.

6. Composition de revêtement selon la revendication 4, caractérisée en ce que l'on utilise la diéthanolamine comme ammonium substitué par hydroxyalkyle.

7. Composition de revêtement selon la revendication 4, caractérisée en ce que l'on utilise la triéthanolamine comme ammonium substitué par hydroxyalkyle.

8. Composition de revêtement selon l'une au moins des revendications 1 à 3, caractérisée en ce que les sels sont des sels d'ammonium substitué par alkyle.

9. Composition de revêtement selon la revendication 8, caractérisée en ce que le reste alkyle a de 1 à 6 atomes de carbone.

10. Composition de revêtement selon l'une au moins des revendications 1 à 3, caractérisée en ce que les sels sont des sels d'ammonium substitué par aryle.
